Europäisches Patentamt

European Patent Office

Office européen des brevets

(11) Publication number: **0 173 577**
**B1**

## EUROPEAN PATENT SPECIFICATION

(45) Date of publication of patent specification: **28.06.89**

(51) Int. Cl.⁴: **A 21 C 3/02**

(21) Application number: **85306168.7**

(22) Date of filing: **30.08.85**

(54) Apparatus for stretching plastic dough.

(30) Priority: **31.08.84 JP 183405/84**

(43) Date of publication of application:
**05.03.86 Bulletin 86/10**

(45) Publication of the grant of the patent:
**28.06.89 Bulletin 89/26**

(84) Designated Contracting States:
**AT BE CH DE FR GB IT LI NL SE**

(56) References cited:
**EP-A-0 128 015**
**DE-A-2 250 569**
**DE-B-1 532 937**
**DE-C- 641 036**
**US-A-2 735 379**

(73) Proprietor: **RHEON AUTOMATIC MACHINERY CO. LTD.**
**2-3, Nozawa-machi**
**Utsunomiya-shi Tochigi-ken (JP)**

(72) Inventor: **Hayashi, Torahiko**
**3-4, Nozawa-machi**
**Utsunomiya-shi Tochigi-ken (JP)**

(74) Representative: **Leale, Robin George et al**
**FRANK B. DEHN & CO. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to an apparatus for stretching plastic dough having viscoelasticity, such as bread or confectionery dough, and more particularly to an apparatus for effectively stretching the dough by a simple and reliable mechanism. The apparatus may also be used to stretch any other suitable materials.

U.S. Patent No. 3,973,895 discloses an apparatus wherein a plurality of rollers are arranged in an endless, oval, path located above a plurality of conveyors for dough. Although dough fed between the rollers and the conveyors is smoothly stretched in the apparatus of this prior art, it requires a complex mechanism to transmit power to rotate the rollers about their axes and to move them along the endless roller path, and furthermore a large number of rollers are required.

It is known from DE—C—641 036 to provide apparatus for stretching plastic dough, comprising a conveyor mechanism and a plurality of rollers above the conveyor mechanism, the rollers being freely rotatable about their axes and being movable back and forth along the conveying path of the conveyor mechanism, the lower portions of the rollers being arranged to follow a straight path spaced apart from and above the conveyor mechanism by a predetermined distance. In such apparatus a thin dough strip is formed from a thicker mass of dough by squeezing the dough between the conveyor mechanism and the rollers.

According to the present invention there is provided apparatus for stretching plastic dough, comprising a conveyor mechanism and a plurality of rollers above the conveyor mechanism, the rollers being freely rotatable about their axes and being movable back and forth along the conveying path of the conveyor mechanism, the lower portions of the rollers being arranged to follow a straight path spaced apart from and above the conveyor mechanism by a predeterminred distance, characterized in that the conveyor mechanism comprises a plurality of serially disposed conveyors arranged to be continuously driven at different speeds so as to stretch dough fed between the conveyors and the rollers.

During operation of the apparatus, by driving the conveyors continuously at different speeds, with a downstream conveyor being driven at a speed higher than that of an upstream conveyor, stretching of the dough between the two conveyors is effected.

In preferred apparatus, the shafts of the rollers are provided with slide members which are slidably mounted in a roller frame on each side of the apparatus, the roller frames being mounted on a main frame on which the conveyors are also mounted. Each roller shaft is connected to a connecting arm which is itself connected to a crank arm driven by a motor, so that the rollers can move back and forth together in unison. The speed of movement of the rollers is preferably substantially higher than that of any of the conveyors. The rollers can also rotate about their shafts by means of their frictional contact with the dough or by means of rolling friction with friction plates mounted to the rollers frames whereby the dough fed between the rollers and the conveyors is pressed, levelled, and rolled out into a thinner dough sheet.

An embodiment of the invention will now be described by way of example and with reference to the accompanying drawings, in which:—

Fig. 1 is a side elevational view of an embodiment of the present invention;

Fig. 2 is a plan view of the embodiment of Fig. 1;

Fig. 3 is a fragmentary sectional view of a roller and a conveyor of the embodiment of Fig; 1; and

Fig. 4 diagrammatically illustrates an embodiment of the invention.

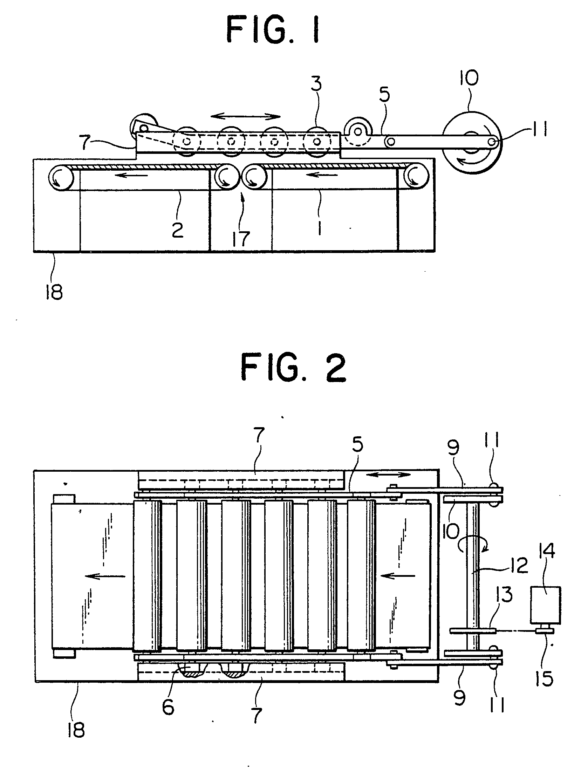

In Fig. 1, an upstream conveyor 1 and a downstream conveyor 2 are disposed in series in a frame 18. These conveyors are normally driven in a direction as shown by the arrows in the Figure, but may be driven in the reverse direction if desired. The conveying speed of the downstream conveyor 2 is higher than that of the upstream conveyor 1. When the conveyors are driven in reverse, however, the speed of conveyor 1 is higher than that of conveyor 2.

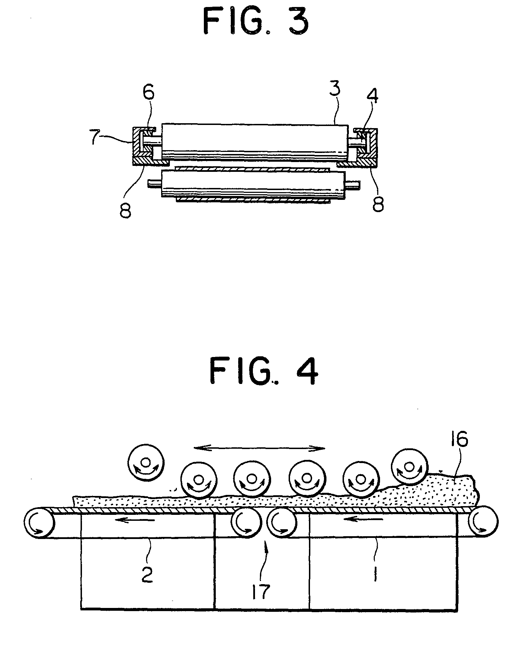

As shown in Figs. 1, 2 and 3, a plurality of rollers 3 are mounted in parallel above the conveyors. All of the rollers are in the same plane except for two rollers at the upstream and downstream ends, the latter two rollers being located slightly above the plane of the others, because when a large mass of dough is to be stretched it may then be more easily fed between the first roller and the conveyor, as shown in Fig. 4. Each roller is mounted on a shaft 4 about which it rotates, the shaft extending beyond the roller at each end. Slide members 6 of a suitable shape, for instance rectangular in cross-section, are fixed to the ends of the shafts 4 and are adapted to slide within the recesses of two roller frames 7, which are U-shaped in cross-section and are mounted on the frame 18 on opposite sides of the rollers. The shafts 4 are all fixedly connected to a pair of connecting arms 5 in the vicinity of the ends of the rollers 3. Each connecting arm 5 comprises a horizontally disposed plate formed with holes to receive the shafts 4, and the arms 5 are rotatably connected one to each of a pair of crank arms 9. The other ends of the crank arms 9 are rotatably connected by means of pins 11 to points near the circumference of a pair of discs 10 mounted on the ends of a rotary shaft 12 supported by the frame of the apparatus. A sprocket 13 is mounted on the rotary shaft 12 and is connected to a sprocket 15 of a motor 14 by a drive chain. When the motor 14 rotates, the sprocket 15 rotates and so causes the sprocket 13 to rotate. The rotation of the sprocket 13 causes the rotary shaft 12 and the discs 10 to rotate. Since the pins 11 are eccentrically connected to the discs 10, the crank arms 9 make a crank motion to cause a reciprocative linear motion of the connecting arms 5.

The rollers 3 are arranged to rotate freely about the shafts 4. A pair of friction plates 8 are mounted on the bottom of the roller frames 7 to frictionally engage the rollers 3 as shown in Fig. 3. By the reciprocal motion of the connecting arms 5, the rollers 3 correspondingly reciprocate back and fourth and at the same time are caused to rotate by rolling friction engagement with the friction plates 8, whereby dough 16 fed onto the upstream conveyor 1 is initially levelled on that conveyor. The speed of the reciprocal motion of the connecting arms 5 is preferably substantially higher than the conveying speed of either of the conveyors 1, 2, so that the reciprocal motion of the rollers 3 is repeated several times before the dough 16 is transferred onto the downstream conveyor 2. Since the conveying speed of the downstream conveyor 2 is higher than that of the upstream conveyor 1, stretching of the dough 16 is smoothly effected, to produce dough of a desired thickness.

As mentioned previously, the dough can be fed from the other end of the apparatus if the conveying direction is reversed and the conveying speed of the conveyors is suitably adjusted. Even if the friction plates 8 are not provided, the rollers 3 can still roll out the dough by means of rolling friction therewith. Although in the illustrated apparatus the roller frames 7 and the conveyors 1, 2 are fixedly mounted on the frame 18, the addition of a height-adjusting mechanism to the roller frames or to the conveyors can enable dough of various thicknesses to be fed into the apparatus. The number of the rollers may be changed to enable the apparatus to more suitably stretch dough of different rheological characteristics. Further, although in the illustrated apparatus the roller frames 7, and consequently, the rollers 3, are parallel with the conveying path, the conveying path may if desired be inclined relative to the rollers to more easily receive the dough and to effectively stretch the same.

It will be seen from the above description that the apparatus of the preferred embodiment is simpler in structure and easier to operate, whilst still attaining results at least equal to the prior art apparatus. Furthermore production costs are lower and handling and maintenance are easier.

Thus a simple but reliable stretching apparatus is provided which rolls out the dough with the same efficiency as that of a stretching apparatus having an endless roller mechanism requiring many rollers, gearings, sprockets, chains, and so forth.

In addition, changes in the distance between the rollers and the conveyors, and the angle which the said straight path of the rollers makes with the conveyors, can be made in response to various dough thicknesses and many kinds of dough with different rheological properties. As will be understood from the present specification, although apparatus according to the present invention may be composed simply of a plurality of serially arranged conveyors and a plurality of rollers positioned above the conveyors, an excellent stretching effect can still be achieved. Consequently, the apparatus is very suitable for industries treating various plastic and viscoelastic materials, in addition to food companies manufacturing dough and the like.

## Claims

1. Apparatus for stretching plastic dough, comprising a conveyor mechanism and a plurality of rollers (3) above the conveyor mechanism, the rollers (3) being freely rotatable about their axes and being movable back and forth along the conveying path of the conveyor mechanism, the lower portions of the rollers (3) being arranged to follow a straight path spaced apart from and above the conveyor mechanism by a predetermined distance, characterized in that the conveyor mechanism comprises a plurality of serially disposed conveyors (1, 2) arranged to be continuously driven at different speeds so as to stretch dough fed between the conveyors (1, 2) and the rollers (3).

2. Apparatus as claimed in claim 1, wherein the distance between the said straight path of the rollers (3) and the conveyors (1, 2) is adjustable.

3. Apparatus as claimed in claim 1, wherein the said straight path of the rollers (3) is inclined forwardly or rearwardly of the conveying path of the conveyors (1, 2), at a predetermined angle.

4. Apparatus as claimed in any of claims 1 to 3, wherein the level of the conveying path of each of the conveyors (1, 2) is independently adjustable.

## Patentansprüche

1. Vorrichtung zum Dehnen von plastischem Teig, umfassend einen Fördermechanismus und eine Vielzahl von Rollen (3) über dem Fördermechanismus, wobei die Rollen (3) um ihre Achsen frei drehbar und entlang einer Förderbahn des Fördermechanismus hin- und herbewegbar sind, und wobei die unteren Teile der Rollen (3) so angeordnet sind, daß sie einer in einem bestimmten Abstand von und über dem Fördermechanismus vorgesehenen geraden Bahn folgen, dadurch gekennzeichnet, daß der Fördermechanismus eine Vielzahl von in Serie angeordneten Förderern (1, 2) umfaßt, die so angeordnet sind, daß sie kontinuierlich mit unterschiedlichen Geschwindigkeiten angetrieben werden, um den zwischen den Förderern (1, 2) und den Rollen (3) geführten Teig zu dehnen.

2. Vorrichtung, wie in Anspruch 1 beansprucht, worin der Abstand zwischen der geraden Bahn der Rollen (3) und den Förderern (1, 2) einstellbar ist.

3. Vorrichtung, wie in Anspruch 1 beansprucht, worin die gerade Bahn der Rollen (3) vor oder hinter der Förderbahn der Förderer (1, 2) um einen vorbestimmten Winkel geneigt ist.

4. Vorrichung, wie in einem der Ansprüche 1 bis 3 beansprucht, worin die Niveaus der Förderbahnen der Förderer (1, 2) unabhängig voneinander einstellbar sind.

**Revendications**

1. Appareil pour allonger une pâte plastique, comprenant un mécanisme transporteur et plusieurs rouleaux (3) au-dessus du mécanisme transporteur, les rouleaux (3) pouvant tourner librement sur le axes et pouvant être animés d'un mouvement de va-et-vient le long du trajet de transport du mécanisme transporteur, les parties inférieures des rouleaux (3) étant disposées de façon à suivre un trajet droit espacé d'une distance prédéterminée au-dessus du mécanisme transporteur, caractérisé en ce que le mécanisme transporteur comprend plusieurs transporteurs (1, 2) disposés en série, agencés de façon à être entraînés en continu à des vitesses différentes afin d'allonger de la pâte avancée entre les transporteurs (1, 2) et les rouleaux (3).

2. Appareil selon la revendication 1, dans lequel la distance entre ledit trajet droit des rouleaux (3) et les transporteurs (1, 2) est réglable.

3. Appareil selon la revendication 1, dans lequel ledit trajet droit des rouleaux (3) est incliné vers l'avant ou vers l'arrière du trajet de transport des transporteurs (1, 2), d'un angle prédéterminé.

4. Appareil selon l'une quelconque des revendications 1 à 3, dans lequel le niveau du trajet de transport de chacun des transporteurs (1, 2) peut être réglé de façon indépendante.

# FIG. 1

# FIG. 2

# FIG. 3

# FIG. 4